# EUROPÄISCHE PATENTSCHRIFT

(11) **EP 2 677 187 B1**
(45) Veröffentlichungstag und Bekanntmachung des Hinweises auf die Patenterteilung: **20.05.2020**
(21) Anmeldenummer: 13169504.1
(22) Anmeldetag: 28.05.2013
(51) Int. Cl.: F16D 23/02

(54) **Reibring, Synchronisierungseinheit, sowie ein Zahnräderwechselgetriebe für ein Fahrzeug**
Friction ring, synchronisation unit and a wheel gear box for a motor vehicle
Anneau de friction, appareil de synchronisation, ainsi que boîte manuelle à engrenages pour un véhicule

(30) Priorität: 18.06.2012 EP 12172322
(43) Veröffentlichungstag der Anmeldung: 25.12.2013
(73) Patentinhaber: Oerlikon Friction Systems (Germany) GmbH, 28719 Bremen (DE)
(72) Erfinder: Gary, Skipper, Gowerton Swansea, SA4 3GH (GB); Spreckels, Marcus, 28876 Sagehorn (DE); Christoffer, Ulf, 28719 Bremen (DE); Augustin, Sebastian, 28307 Bremen (DE)
(74) Vertreter: Intellectual Property Services GmbH

(56) Entgegenhaltungen:
- EP-A1- 1 199 489
- EP-B1- 1 507 091
- WO-A1-2008/155173
- DE-A1-102007 058 573
- DE-A1-102008 061 967
- US-A1- 2008 067 026
- US-A1- 2009 314 599

## Beschreibung

Die Erfindung betrifft einen Reibring für eine Synchronisiereinheit eines schaltbaren Zahnräderwechselgetriebes, eine Synchronisierungseinheit, sowie ein Zahnräderwechselgetriebe für ein Fahrzeug gemäss dem Oberbegriff der unabhängigen Ansprüche.

Synchronringe dienen in einem mechanischen schaltbaren Zahnräderwechselgetriebe, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartner erzielt. Die Funktionsweise solcher Getriebe und der Ablauf des Synchronisationsvorgangs sind an sich bekannt und brauchen dem Fachmann hier nicht mehr näher erläutert zu werden.

Zum Schutz gegen vorzeitigen Verschleiss und / oder zur Verbesserung der Reibcharakteristik ist es bekannt, die Reibflächen von Synchronringen, die in der Regel aus einem Metall oder einer Metallegierung, wie beispielsweise aus Messing oder Stahl gefertigt sind, mit einer Reibschicht zu versehen. Dabei sind ganz verschiedene Typen von Reibschichten im Gebrauch, z.B. thermische Spritzschichten aus Molybdän, Carbon-Reibschichten oder Reibschichten aus anderen Materialien.

Synchronisierungseinheiten für Zahnräderwechselgetriebe bzw. einzelne Komponenten von Synchronisierungseinheiten sind im Stand der Technik vielfältig und ausführlich beschrieben.

So sind beispielweise Handschalt- und Doppelkupplungsgetriebe heutzutage in vielen Anwendungen die dominierenden Getriebetypen im Klein- und Mittelklassewagensegment insbesondere bei Front-Quer-Antrieben. Die Schaltcharakteristik dieser Getriebearten wird wesentlich durch die Synchronisierung bestimmt, deren Prinzip heute wie damals auf dem sogenannten Borg-Warner-Konzept beruht, das erstmals ausführlich in der EP 1 507 091 B1 beschrieben wurde. Eine hohe Effizienz zur Realisierung kurzer Schaltzeiten bei niedrigen Schaltkräften und ein hoher Schaltkomfort sind immer wichtiger werdende Anforderungen an das System Synchronisierung.

Die geometrische Auslegung einer klassischen Borg-Warner-Synchronisierung hinsichtlich Effizienz und Schaltkomfort wird dabei durch einen Zielkonflikt bestimmt. Eine hohe Effizienz wird durch kleine Konuswinkel der Reibpaarung erreicht, der Verstärkungseffekt des Konus erzeugt hohe Synchronisierungsmomente trotz niedriger Betätigungskräfte. Demgegenüber setzt der Selbsthemmungseffekt, der ein Lösen der Reibflächen verhindert und den Schaltkomfort substanziell und spürbar für den Fahrer beeinträchtigt, der Minimierung des Konuswinkels eine natürliche Grenze. Die Optimierung einer Synchronisierung ist daher immer ein Kompromiss zwischen Effizienz und Schaltkomfort.

Die dominierende Art von Synchronisierungen, die innerhalb der dem Getriebefachmann bestens bekannten MT-, AMT- und DCT-Getrieben genutzt werden, sind im konventionellen BorgWarner Design gemäss EP 1 507 091 B1 ausgeführt. Aufgrund der ständigen Forderungen nach höheren Schaltleistungen und Drehmomenten, wurden auf dieser Basis anspruchsvollen Multiple-Konus-System-Synchronisierungen mit doppelten, dreifachen und in bestimmten Nischen-Anwendungen auch mit vervierfachen Reibflächen entwickelt. Diese hoch entwickelten Synchronmodule haben erhöhte Leistungs- und Momentenkapazitäten, aufgrund der mehrfachen Reibungsflächen und der hohen Reibematerialeigenschaften. Nichtsdestotrotz erhöhen sie auch die Komplexität, Kosten und nicht zuletzt auch das Gewicht der entsprechenden Getriebe.

Obwohl diese Arten von Synchronisierungen kontinuierlich, in Bezug auf die Fertigungsprozesse und Leistung, optimiert wurden, bleibt bis heute ein Designkonflikt.

Eines der kritischsten Merkmale bei der Konstruktion von Synchronisierungen ist nämlich die Auslegung der Winkel der beteiligten konischen Reibflächen. Dieses wichtige Merkmal bestimmt zwei Hauptfunktionen:
Zum einen die Synchronleistung. Der Konuswinkel ist nämlich einer der wichtigsten Faktoren bei der Bestimmung des Reibmoments in Kombination mit dem Durchmesser des Konus und des Reibwerts zwischen dem Zahnrad und der Konusfläche des Synchronrings. Die Reduzierung der Konuswinkel erhöht das Drehmoment. Dadurch wird die Schaltkraft reduziert und kürzere Synchronisationszeiten können realisiert werden.

Auf der anderen Seite aber auch die Schaltqualität in Bezug auf das Lösen der Reibkonen am Ende der Synchronisation. Der Konuswinkel hat einen großen Einfluss bei der Bestimmung der Qualität des Schaftgefühls des Fahrers. Ein zu kleiner Winkel, kann ungünstige Auswirkungen erzeugen, wie z. B. Versperren oder zweite Druckpunkte.

Um eine maximale Schaltleistung zu erzielen, ist ein kleiner Konuswinkel erforderlich. Um das Design im Hinblick auf die Schaltqualität zu optimieren, ist dagegen ein großer Konuswinkel erforderlich. Daraus resultiert somit für konventionelle Synchronisierungen einen Zielkonflikt bezüglich des Designs.

Daher gibt es im Stand der Technik je nach Anforderung Unterschiede bei der Designauslegung der verschiedenen Getriebetypen. Die Synchronleistung steht beispielweise bei DCT Getrieben im Vordergrund und weniger die Schaltqualität. Bei manuell geschalteten Getrieben wird dagegen versucht eine ausgewogene Balance zwischen Leistung und Schaltqualität zu erreichen.

Wie bereits erwähnt, müssen dabei die Momentenkapazitäten erhöht werden, um die Synchronleistung zu erhöhen, in Bezug auf niedrigere Schaltkräfte und kürzere Schaltzeiten. Jedoch jede Synchronisierung wird durch das Design und Anwendung auf eine erzielbare Leistung begrenzt, sei es durch den Durchmesser, Reibwert, oder den Mindest-Konuswinkel.

Um die Leistung oder Momentenkapazitäten zu erhöhen, kann der Konstrukteur bisher im Allgemeinen nur zusätzliche Reiboberflächen hinzufügen, d.h. vom Einfachkonus auf Mehrfachkonen. Aber auch bei zusätzlichen Reibflächen, gibt es dennoch funktionale Grenzen der Momentenkapazitäten aufgrund der Konuswinkel.

Während der eigentlichen Synchronisierung steuert die angewendete Kraft (F) den Synchronisierer mit den Reaktionskräften Fₐₓ und F_{rad} an. Mit Hilfe eines Koordinatensystems kann dies jetzt in F_{R} (Reibung) und F_{N} (Normalkraft) aufgeteilt werden, wobei der Winkel ρ = tan⁻¹ µ ist und α der Konuswinkel ist. Damit das System im Gleichgewicht ist, muss eine Kraft F_{U}, die die Umfangskraft im Material ist, der Radialkraft F_{rad} entgegenwirken.

Während des Lösens, wird eine zusätzliche Kraft zur Kraft F_{U} benötigt, um den Ring vom Gangradkonus zu lösen. Die Reibungskraft F_{R} ist jetzt in der entgegengesetzten Richtung vom Synchronierungsvorgang und α <tan-1 <tan-1 µ (µ ist der statische Reibkoeffizient). Dieser Effekt wird Selbsthemmung genannt und beeinträchtigt negative die Schaltqualität. Der funktionelle Grenzwert für alle Synchronisierungen ist α > tan-1 µ.

Wenn der Konuswinkel innerhalb des Systems weiter reduziert wird, um die Momentenkapazitäten zu verbessern, dann erhöht sich auch das Niveau an zweiten Druckpunkten, aufgrund von Selbsthemmung. Dadurch wird die Schaltung als unangenehm empfunden. In extremen Fällen kann es sogar dazu führen, dass es zum vollständigen Blockieren kommt.

In der EP 1199489 A1 wird ein Reibring einer Synchronisiereinrichtung beschrieben. Der Reibring weist eine äussere und eine innere Reibfläche für einen Reibkontakt mit einem äusseren und einem inneren Synchronring der Synchronisiereinrichtung auf. Der Reibring ist so ausgestaltet, dass die Reibungsbelastung an der äusseren und der inneren Reibfläche in etwa gleich gross sind. Dazu ist eine Unterbrechung auf dem Umfang des Reibrings vorgesehen und die beiden Reibflächen weisen unterschiedliche Kegelwinkel auf.

Die Aufgabe der Erfindung ist es daher, einen verbesserten Synchronisierungsmechanismus und die dazu notwendigen Komponenten zur Verfügung zu stellen, so dass die Eingangs beschriebenen, aus dem Stand der Technik bekannten Nachteile vermieden werden können. Insbesondere soll durch die vorliegende Erfindung der Zielkonflikt hinsichtlich Effizienz und Schaltkomfort aufgelöst werden. D.h. durch die Erfindung soll einerseits eine hohe Effizienz der Reibpaarung erreicht werden, also ein Verstärkungseffekt erzielt werden, so dass der Konus hohe Synchronisierungsmomente trotz niedriger Betätigungskräfte erzeugen kann. Anderseits soll gleichzeitig der Selbsthemmungseffekt, der ein Lösen der Reibflächen verhindert oder zumindest erschwert und den Schaltkomfort substanziell und spürbar für den Fahrer beeinträchtigt, möglichst vermieden bzw. auf ein angemessenes Mass reduziert werden. Aufgabe der Erfindung ist somit eine Optimierung der Synchronisierung ohne dass die aus dem Stand der Technik notwendigen Kompromisse zwischen Effizienz und Schaltkomfort in Kauf genommen werden müssen.

Die diese Aufgaben lösenden Gegenstände der Erfindung sind durch die Merkmale des unabhängigen Anspruchs gekennzeichnet.

Die abhängigen Ansprüche beziehen sich auf besonders vorteilhafte Ausführungsformen der Erfindung.

Die Erfindung betrifft somit einen Reibring für eine Synchronisierungseinheit eines Zahnräderwechselgetriebes, welcher Reibring einen konischen Reibringkörper mit einer inneren Reibfläche und eine, bevorzugt als weitere Reibungsfläche ausgebildeten äussere Einbaufläche umfasst, die den Reibringkörper in einer senkrecht zu einer axialen Reibringachse verlaufenden radialen Umfangsrichtung jeweils begrenzen, und sich die innere Reibfläche unter einem vorgebaren Reibwinkel und die äussere Einbaufläche unter einem vorgebaren Einbauwinkel jeweils konisch entlang der Reibringachse erstrecken. Erfindungsgemäss ist der Reibwinkel verschieden vom Einbauwinkel.

Wesentlich für die Erfindung ist es, dass der Reibring derart ausgestaltet ist, dass der Reibwinkel verschieden vom Einbauwinkel ist. Dadurch wird erstmals der Zielkonflikt hinsichtlich Effizienz und Schaltkomfort, wie er seit langem im Stand der Technik besteht, zuverlässig aufgelöst. D.h. durch die Erfindung wird einerseits eine hohe Effizienz der Reibpaarung erreicht, also ein Verstärkungseffekt erzielt, so dass der Konus hohe Synchronisierungsmomente trotz niedriger Betätigungskräfte erzeugen kann. Anderseits wird gleichzeitig der bekannte schädliche Selbsthemmungseffekt, der ein Lösen der Reibflächen verhindert oder zumindest erschwert und den Schaltkomfort substanziell und spürbar für den Fahrer beeinträchtigt, durch die Erfindung praktisch vollständig vermieden. Somit ist es durch die Erfindung erstmals möglich, dass die aus dem Stand der Technik notwendigen Kompromisse zwischen Effizienz und Schaltkomfort nicht mehr in Kauf genommen werden müssen.

Der neuartige erfindungsgemässe Ansatz diesen Zielkonflikt aufzulösen, ist die räumliche Trennung der Funktion "Synchronisierungsmoment erzeugen" und "Reibpaarung lösen", die bisher in ein und derselben Reibpaarung vereint waren. Die Trennung wird durch einen, bevorzugt aber nicht notwendig segmentierten Reibring mit unterschiedlichen Konuswinkeln am Innen- und Außendurchmesser erreicht. Ein Durchmesser erzeugt kraftschlüssig das Synchronisierungsmoment, der andere Durchmesser sorgt für ein zuverlässiges Lösen des Kraftschlusses. Somit erfolgt erfindungsgemäss eine unabhängige Optimierung der beiden Funktionen hinsichtlich ihrer spezifischen Anforderungen. Durch die Erfindung wurde damit erstmals festgestellt, dass es möglich ist, durch die räumliche Trennung der Funktionen der Synchronisationsleistung (Generierung geringer Schaltkräfte und kurzer Schaltzeiten) von der Schaltqualität (zweiter Druckpunkt und Selbsthemmungseffekte) den bekannten Zielkonflikt zu lösen. Beide Funktionen sind im klassischen, aus dem Stand der Technik bekannten Design direkt miteinander über den Konuswinkel verbunden, was zu den geschilderten, bisher unvermeidbaren Optimierungsproblemen geführt hatte.

Dabei werden durch die Erfindung auch weitere wesentliche Voraussetzungen erfüllt, die in bestimmten Fällen wesentlich sein, um das gewünschte Ergebnis zu erreichen.

Das erfindungsgemässe Design mit einem vom Reibwinkel verschiedenen Einbauwinkel nimmt das gesamte Spektrum der Momentenkapazitäten und Schaltkomfort Anforderungen heutiger konventioneller Synchronisierungen auf. Die erfindungsgemässen Komponenten der Synchronisiereinheit passen in den zur Verfügung stehenden Bauraum. Die Herstellung erfindungsgemässer Komponenten ist auch aus Stahlstanzteilen möglich, die damit sehr einfach und kostengünstig herstellbar sind. Die Komponenten der vorliegenden Erfindung, insbesondere der Reibring sind geeignet für die Anwendung und Beschichten mit bestehenden Technologien und Prozessen, sowie den zur Verfügung stehenden Reibmaterialien, wobei gleichzeitig die Produktions- und Stückkosten zumindest, gleich oder in der Praxis oft niedriger als bei den heute bekannten Mehrfachsynchronisierungen ausfallen.

Der innovative Lösungsansatz der vorliegenden Erfindung, nämlich die beiden Funktionen Synchronisation und Lösen räumlich zu trennen, wird im Wesentlichen durch einen kleinen Winkel zur konischen Reibfläche, der die Leistung oder die Momentenkapazitäten verbessert und durch einen großen Winkel zum Lösen des Systems, wodurch die negativen Auswirkungen der Selbsthemmung, die zu einer schlechten Schaltqualität führen, erzielt.

In einem besonders bevorzugten Ausführungsbeispiel der vorliegenden Erfindung wird ein weiterer kritischer Faktor berücksichtigt, nämlich die Kräfte in Umfangsrichtung (F_{U}) innerhalb des Reibrings. Durch den kleinen Winkel ist es je nach Anwendung und Ausführungsform nämlich möglich, dass es zur Selbsthemmung auf dem Zahnradkonus kommen kann. Um dieses Risiko auszuschließen, kann der Reibring auch segmentiert werden.

Wie an sich bekannt ist, wird während der Synchronisation der Synchronring mit einer externen Kraft F belastet. Das erzeugt externe radiale Kräfte, die auf das Segment F_{rad} wirken. Die Reaktionskräfte Fₐₓ und F_{rad} an der Reibfläche sind im Gleichgewicht und sind die gleichen wie bei einer herkömmlichen Synchronisierung. Nach der Synchronisation, wenn die Schiebemuffenzähne die Zähne des Synchronrings passieren, wird die externe Kraft dann aufgelöst. Der große Winkel trennt durch α₂ > tan-1 µ2 und daher gibt es keine F_{rad}, die auf den Segmenten wirken und da es kein Material Beanspruchung innerhalb der Segmente durch das Reibelement ist kein fester Ring, trennt sich die kleinen Winkel, da keine internen oder äußere Kräfte auf sie wirken.

Die Erfindung bezieht sich weiter auf ein Schaltgetriebe für ein Fahrzeug, insbesondere für einen Personenkraftwagen, einen Transporter oder einen Lastkraftwagen mit einem Synchronring nach einem der vorangehenden Ansprüche.

Im Folgenden wird die Erfindung an Hand der schematischen Zeichnung näher erläutert. Es zeigen:
- Fig. 1a: einen erfindungsgemässen Reibring mit segmentiertem Reibringkörper in einer expandierten Konfiguration;
- Fig. 1b: den Reibring gemäss Fig. 1a in einer zusammengezogenen Konfiguration;
- Fig. 1c: einen Schnitt entlang der Schnittlinie I-I gemäss Fig. 1a;
- Fig. 1d: einen Abschnitt des Rebrings gemäss Fig. 1a bzw. Fig. 1b in perspektivischer Ansicht;
- Fig. 2a: ein zweites Ausführungsbeispiel eines erfindungsgemässen segmentierten Reibrings mit radialen Verdrehsicherungen;
- Fig. 2b: einen Abschnitt des Rebrings gemäss Fig. 2a in perspektivischer Ansicht;
- Fig. 3: ein einfaches Ausführungsbeispiel einer erfindungsgemässen Synchronisierungseinheit;

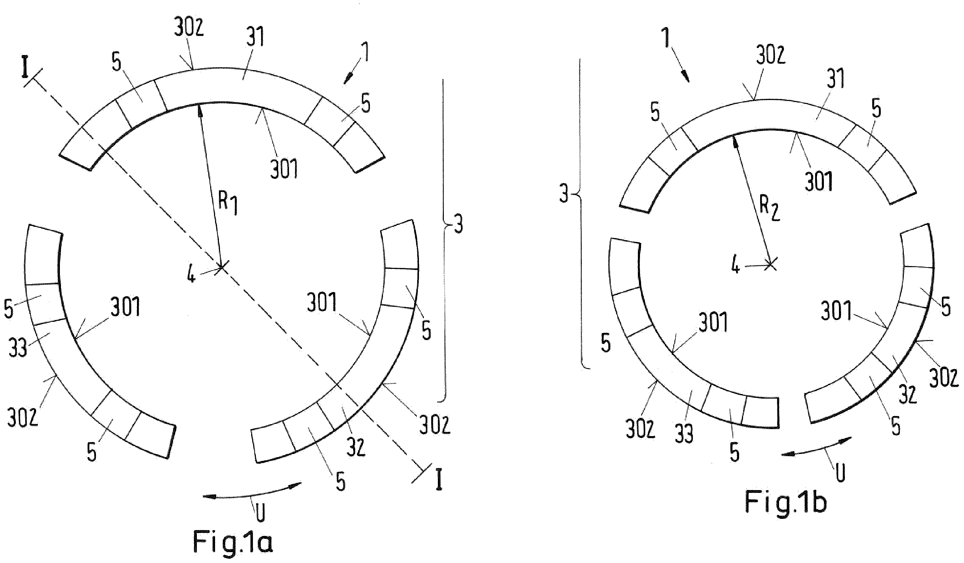

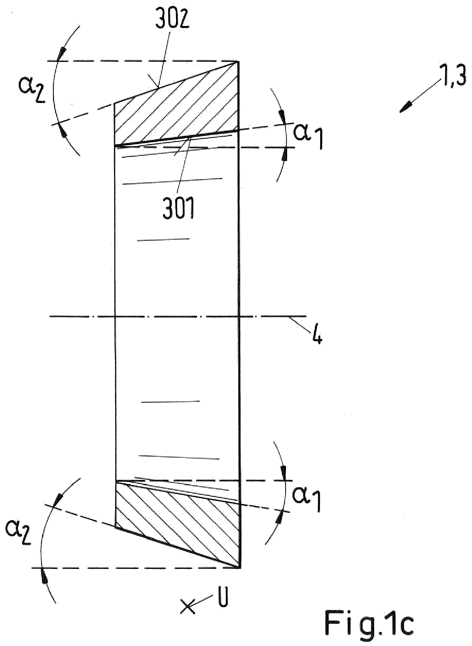

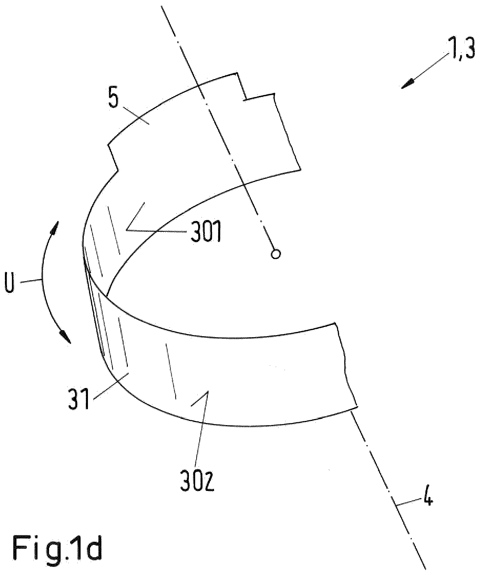

Die Fig. 1a und Fig. 1b bzw. die Fig. 1c und 1d zeigen in einer schematischen Darstellung ein und dasselbe sehr einfache Ausführungsbeispiel eines erfindungsgemässen Reibrings mit segmentiertem Reibringkörper, wobei der Reibring im Folgenden gesamthaft mit dem Bezugszeichen 1 bezeichnet wird.

Fig. 1a zeigt den Reibring 1 dabei in einer expandierten Konfiguration, während Fig. 1b denselben Reibring in einer zusammengezogenen Konfiguration zeigt. Fig. 1c zeigt zum besseren Verständnis einen Schnitt entlang der Schnittlinie I-I gemäss Fig. 1a, während anhand der Fig. 1d ein Abschnitt des Reibrings 1 gemäss Fig. 1a bzw. Fig. 1b in perspektivischer Ansicht gezeigt ist, um die sich entlang der Reibringachse 4 des Reibrings 1 erstreckenden Verdrehsicherungen 5 besser sehen zu können.

Der erfindungsgemässe Reibring 1 gemäss den Fig. 1a bis Fig. 1d dient zur Verwendung in einer Synchronisierungseinheit 2 eines Zahnräderwechselgetriebes, insbesondere für ein Fahrzeug, im Speziellen für einen Personenkraftwagen, einen Transporter oder einen Lastkraftwagen. Der Reibring 1 umfasst einen konischen Reibringkörper 3 mit einer inneren Reibfläche 301 und einer, bevorzugt als weitere Reibungsfläche ausgebildeten äusseren Einbaufläche 302, die den Reibringkörper 3 in einer senkrecht zu einer axialen Reibringachse 4 verlaufenden radialen Umfangsrichtung U jeweils begrenzen. Dabei erstreckt sich die innere Reibfläche 301 unter einem vorgebaren Reibwinkel α₁ und die äussere Einbaufläche 302 unter einem vorgebaren Einbauwinkel α₂ jeweils konisch entlang der Reibringachse 4, wobei gemäss der vorliegenden Erfindung der Reibwinkel α₁ verschieden vom Einbauwinkel α₂ ist.

Wie insbesondere der Fig. 1c deutlich zu entnehmen ist, ist der Einbauwinkel α₂ besonders bevorzugt grösser ist als der Reibwinkel α₁. Dabei ist es im Prinzip auch möglich, dass der Reibwinkel α₁ grösser ist als der Einbauwinkel α₂.

Wie anhand der Fig. 1a und Fig. 1 deutlich zu erkennen ist, ist der Reibringkörper 3 in diesem speziellen Ausführungsbeispiel ein segmentierter Reibringkörper 3 ist, der eine Mehrzahl von separaten Reibringsegmenten 31, 32, 33, im vorliegenden speziellen Ausführungsbeispiel also drei Reibringsegmenten 31, 32, 33 umfasst, die in einer ringförmigen Anordnung den Reibringkörper 3 derart bilden, dass der Reibringkörper 3 im Einbauzustand in einer ersten expandierten Konfiguration gemäss Fig. 1a einen ersten Radius R₁ und in einer zweiten zusammengezogenen Konfiguration gemäss Fig. 1b einen zweiten Radius R₂ hat.

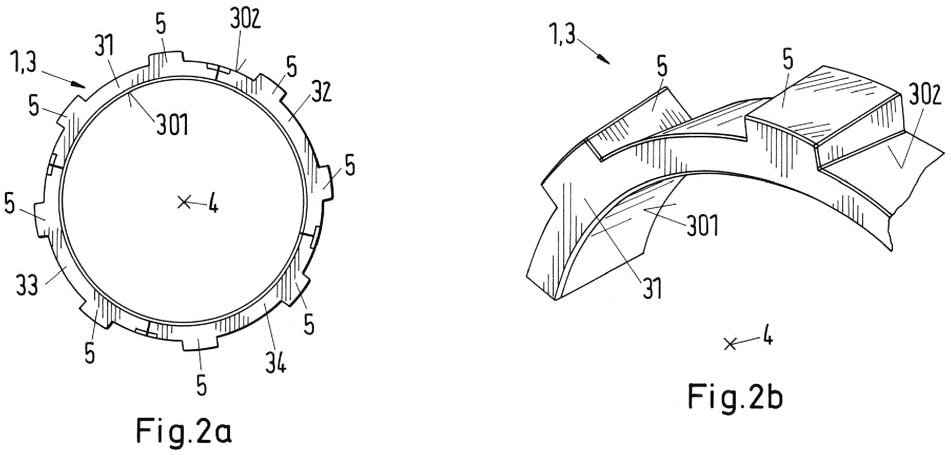

Es versteht sich dabei, dass ein erfindungsgemässer Reibring 1 auch aus einer anderen Anzahl von Reibringsegmenten 31, 32, 33, 34 aufgebaut sein kann, z.B. wie anhand der Fig. 2a und Fig. 2b exemplarisch gezeigt auch aus vier Reibringsegmenten 31, 32, 33, 34 aufgebaut sein kann, oder auch zum Beispiel nur aus zwei oder mehr als vier Reibringsegmenten 31, 32, 33, 34 aufgebaut sein kann.

Am Reibringkörper 3 ist dabei mindestens eine Verdrehsicherung 5 vorgesehen, die sich nach einem ersten Aspekt der Erfindung entlang der Reibringachse 4 erstreckt, was man besonders deutlich aus der Fig. 1d ersehen kann.

Die Fig. 2a und Fig. 2b zeigen dabei das bereits erwähnte andere Ausführungsbeispiel eines nach einem zweiten Aspekt der Erfindung ausgestalteten Reibrings 1, bei welchem sich die Verdrehsicherung 5 im Wesentlichen senkrecht zur Reibringachse 4 erstreckt.

Es versteht sich dabei von selbst, dass unabhängig von den gezeigten speziellen Ausführungsbeispielen die Anzahl der Verdrehsicherungen 5 je nach Ausführungsbeispiel verschieden sein und eine beliebige Anzahl an Verdrehsicherungen 5 vorgesehen sein können.

Besonders vorteilhaft kann an der Reibfläche 301 und / oder an der Einbaufläche 302 eine in den Figuren aus Gründen der Übersichtlichkeit nicht explizit dargestellte Reibbeschichtung, insbesondere ein Reibbeschichtung in Form eines Karbon Reibbelags vorgesehen sein, die unter anderem dazu dienen kann, eine resultierende hohe mechanische und / oder thermische Belastung der Reibpaarung zumindest teilweise zu kompensieren.

Besonders Vorteilhaft ist der Reibring 1 dabei ein Stahlstanzteil oder Blechumformteil, was insbesondere eine industrielle Massenfertigung besonders einfach oder kostengünstig macht.

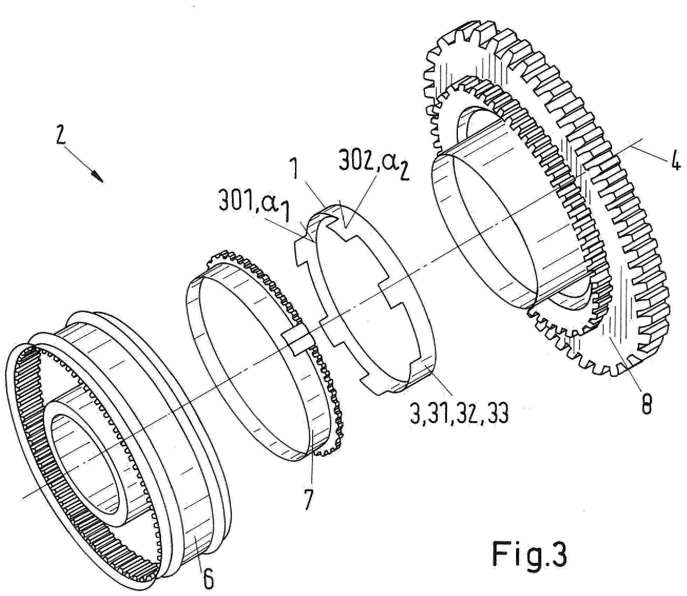

Die Erfindung betrifft weiter eine Synchronisierungseinheit 2 mit einem Reibring 1, wie sie schematisch anhand der Fig. 3 beispielhaft dargestellt ist.

Die Synchronisierungseinheit 2 gemäss Fig. 3 umfasst neben dem erfindungsgemässen Reibring 1 in an sich bekannter Weise weiter eine Schiebemuffe 6, einen Synchronring 7, sowie ein Gangrad 8, wobei die vorgenannten Komponenten derart koaxial zur Reibringachse 4 angeordnet sind, dass im Betriebszustand der Synchronring 7 durch die Schiebemuffe 6 gemeinsam mit dem Reibring 1 entlang der Reibringachse 4 in Richtung zum Gangrad 8 verschiebbar ist, so dass die innere Reibfläche 301 des Reibringkörpers 3 mit dem Gangrad 8 in Eingriff bringbar ist.

Der Synchronring 2 ist dabei in Fig. 3 aus gestanztem Stahl konventioneller Bauart gefertigt. Der Konus des Synchronrings 7 hat dabei denselben großen inneren Winkel α₂, also identisch zum Einbauwinkel α₂ des Reibring 1, wobei der Synchronring 7 an sich bekannte, nicht näher dargestellte Kopplungstaschen für den segmentierten Reibring 1 hat. Der segmentierte Reibring 1 gemäss Fig. 3 ist in drei gleich große Reibringsegmente 31, 32, 33, was aus Gründen der Übersichtlichkeit in Fig. 3 nicht im Detail dargestellt ist. Der Reibring 1 hat gemäss der Erfindung dabei die Einbaufläche 302 mit dem Einbauwinkel α₂, wobei die Einbaufläche 302 als Trennfläche verwendet wird. Der Innenkonus des Reibrings 1 wird durch die Reibfläche 301 mit Reibwinkel α₁ gebildet, wobei α₁ < α₂ gilt. Diese innere Konusfläche, also die Reibfläche 301 wird zum Synchronisieren genutzt.

Im Betriebszustand wird der Synchronring 7 axial in Richtung zum Gangrad 8, das als Zahnrad ausgebildet ist, verschoben und damit werden auch die drei Reibringsegmente 31, 32, 33 des Reibrings 1 durch den Winkel α₂ erfasst. Der Synchronring 7 und der segmentierte Reibring 1 werden dann zusammen gleichzeitig bewegt und mit dem Innenkonus, also der Reibfläche 301 mit Reibwinkel α₁, auf das Gangrad 8, das ebenfalls einen entsprechenden Gegenkonus mit Konuswinkel α₁ hat, eingreifen. Der Synchronring 7 kann dann wie ein herkömmlicher Synchronring 7 ansteuern und indexieren. Die Zähne der Schiebemuffe 6 sind im Kontakt mit den Zähnen des Synchronrings 7 und erzeugen so, durch die Differenzdrehzahl, ein Moment zwischen dem segmentierten Reibring 1 und dem Gangrad 8.

Nach der Synchronisation, wenn das Differenzdrehzahl Null ist, wird die Schiebemuffe 6 axial bewegt, die Synchronringzähne passieren und dann im Kontakt mit den Zähnen der Flanken des Gangrades 8 sein. Aufgrund dessen gibt es keine Axialkraft mehr auf dem Synchronring 7. Der große Winkel a2 wird das System trennen (Winkel > tan⁻¹ µ). Dies resultiert durch die Eliminierung der Kräfte in Umfangsrichtung des segmentierten Reibrings 1. An diesem Punkt brechen der Synchronring 7 und der segmentierte Reibring 1 vom Gangrad 8 los. Anschließend kann die Schiebemuffe 6 das Gangrad 8 passieren. Die Schaltung ist dann vollständig im Eingriff.

Dabei sind im Speziellen mindestes zwei verschiedene Optione 1 und Option 2 möglich. Bei Option 1 hat die Reibfläche oder Momentenerzeugung auf dem Innenkonus der Segmente mit dem kleinen Winkel α₁. Der große Lösewinkel α₂ ist auf der äußeren Konusfläche der Segmente.

Bei Option 2, hat die Reibfläche auf dem Außenkonus der Segmente den kleinen Winkel α₁. Der große Lösewinkel α₂ ist auf der inneren Konusfläche der Segmente, wobei in der Praxis die Option 1 das bevorzugte Konzept ist. Schliesslich betrifft die Erfindung auch ein Zahnräderwechselgetriebe für ein Fahrzeug, insbesondere für einen Personenkraftwagen, einen Transporter oder eine Lastkraftwagen mit einem Reibring 1 oder einer Synchronisierungseinheit 2 wie zuvor eingehend beschrieben.

Es versteht sich, dass alle in dieser Anmeldung explizit diskutierten Ausführungsbeispiele nur exemplarisch für die Erfindung zu verstehen sind und insbesondere auch alle geeigneten Kombinationen, die für spezielle Anwendungen vorteilhaft eingesetzt werden können, bzw. alle dem Fachmann nahe liegenden Weiterbildungen durch die Erfindung erfasst sind.

## Patentansprüche

1. Reibring für eine Synchronisierungseinheit (2) eines Zahnräderwechselgetriebes, bei welchem der Reibring einen konischen Reibringkörper (3) mit einer inneren Reibfläche (301) und eine äussere Einbaufläche (302) umfasst, die den Reibringkörper (3) in einer senkrecht zu einer axialen Reibringachse (4) verlaufenden radialen Umfangsrichtung (U) jeweils begrenzen, wobei sich die innere Reibfläche (301) unter einem vorgebaren Reibwinkel (α₁) und die äussere Einbaufläche (302) unter einem vorgebaren Einbauwinkel (α₂) jeweils konisch entlang der Reibringachse (4) erstrecken, dass der Reibwinkel (α₁) verschieden vom Einbauwinkel (α₂) ist **dadurch gekennzeichnet, dass** am Reibringkörper (3) eine Verdrehsicherung (5) vorgesehen ist, welche bezüglich der inneren, sich konisch verjüngenden Reibfläche (301), auf der Seite mit dem kleineren Durchmesser angebracht ist und/oder sich in Richtung der Reibringachse auf der äusseren Einbaufläche (302) im Wesentlichen senkrecht zur Reibringachse erstreckt.

2. Reibring nach Anspruch 1, wobei der Einbauwinkel (α₂) grösser ist als der Reibwinkel (α₁).

3. Reibring nach einem der Ansprüche 1 oder 2, wobei der Reibringkörper (3) ein segmentierter Reibringkörper (3) ist, der eine Mehrzahl von separaten Reibringsegmenten (31, 32, 33, 34) umfasst, die in einer ringförmigen Anordnung den Reibringkörper (3) derart bilden, dass der Reibringkörper (3) im Einbauzustand in einer ersten expandierten Konfiguration einen ersten Radius (R₁) und in einer zweiten zusammengezogenen Konfiguration einen zweiten Radius (R₂) hat.

4. Reibring nach einem der vorangehenden Ansprüche, wobei die äussere Einbaufläche (302) als weitere Reibungsfläche ausgebildet ist.

5. Reibring nach einem der vorangehenden Ansprüche, wobei an der Reibfläche (301) und / oder an der Einbaufläche (302) eine Reibbeschichtung, insbesondere ein Reibbeschichtung in Form eines Karbon Reibbelags vorgesehen ist

6. Reibring nach einem der vorangehenden Ansprüche, wobei der Reibring ein Stahlstanzteil oder ein Blechumformteil ist.

7. Synchronisierungseinheit mit einem Reibring (1) nach einem der vorangehenden Ansprüche.

8. Synchronisierungseinheit nach Anspruch 7, wobei die Synchronisierungseinheit weiter eine Schiebemuffe (6), einen Synchronring (7), sowie ein Gangrad (8) umfasst, die derart koaxial zur Reibringachse (4) angeordnet sind, dass im Betriebszustand der Synchronring (7) durch die Schiebemuffe (6) gemeinsam mit dem Reibring (1) entlang der Reibringachse (4) in Richtung zum Gangrad (8) verschiebbar ist, so dass die innere Reibfläche (301) des Reibringkörpers (3) mit dem Gangrad (8) in Eingriff bringbar ist.

9. Zahnräderwechselgetriebe für ein Fahrzeug, insbesondere für einen Personenkraftwagen, einen Transporter oder einen Lastkraftwagen mit einem Reibring (1) oder einer Synchronisierungseinheit (2) nach einem der vorangehenden Ansprüche.

## Claims

1. A friction ring for a synchronization unit (2) of a gear changing transmission, in which the friction ring comprises a conical friction ring body (3) with an inner friction surface (301) and an outer installation surface (302), which each delimit the friction ring body (3) in a radial circumferential direction (U) extending perpendicular to an axial friction ring axis (4), wherein the inner friction surface (301), at a predeterminable friction angle (α₁), and the outer installation surface (302), at a predeterminable installation angle (α₂), each extend conically along the friction ring axis (4), that the friction angle (α₁) is different from the installation angle (α₂), **characterized in that** an anti-rotation device (5) is provided on the friction ring body (3), which, with respect to the inner, conically tapering friction surface (301), is arranged on the side with the smaller diameter and/or extends in the direction of the friction ring axis on the outer installation surface (302) essentially perpendicular to the friction ring axis.

2. A friction ring according to claim 1, wherein the installation angle (α₂) is larger than the friction angle (α₁).

3. A friction ring according to anyone of the claims 1 or 2, wherein the friction ring body (3) is a segmented friction ring body (3) comprising a plurality of separate friction ring segments (31, 32, 33, 34) which form the friction ring body (3) in an annular arrangement in such a way that the friction ring body (3) in the installed state has a first radius (R₁) in a first expanded configuration and a second radius (R₂) in a second contracted configuration.

4. A friction ring according to anyone of the preceding claims, wherein the outer installation surface (302) is designed as a further friction surface.

5. A friction ring according to anyone of the preceding claims, wherein a friction coating, in particular a friction coating in the form of a carbon friction lining, is provided on the friction surface (301) and/or on the installation surface (302).

6. A friction ring according to anyone of the preceding claims, wherein the friction ring is a steel punched part or a sheet-metal part.

7. A synchronization unit with a friction ring (1) according to anyone of the preceding claims.

8. A synchronization unit according to claim 7, wherein the synchronization unit further comprises a sliding sleeve (6), a synchronizer ring (7), and a gear wheel (8), which are arranged coaxially to the friction ring axis (4) in such a way that, in the operating state, the synchronizer ring (7) together with the friction ring (1) can be displaced by the sliding sleeve (6) along the friction ring axis (4) in the direction of the gear wheel (8), so that the inner friction surface (301) of the friction ring body (3) can be brought into engagement with the gear wheel (8).

9. A gear change transmission for a vehicle, in particular for a passenger car, a transporter or a truck, with a friction ring (1) or a synchronization unit (2) according to anyone of the preceding claims.

## Revendications

1. Un anneau de friction pour une unité de synchronisation (2) d'une boîte de vitesses à roues dentées, dans lequel l'anneau de friction comprend un corps d'anneau de friction conique (3) avec une surface de friction intérieure (301) et une surface d'installation extérieure (302), qui délimitent respectivement le corps d'anneau de friction (3) dans une direction circonférentielle radiale (U) s'étendant perpendiculairement à un axe d'anneau de friction axial (4), dans lequel la surface de friction intérieure (301), selon un angle de friction (α₁) prédéterminable, et la surface d'installation extérieure (302), selon un angle d'installation (α₂) prédéterminable, s'étendent chacune de façon conique le long de l'axe d'anneau de friction (4), que l'angle de friction (α₁) est différent de l'angle d'installation (α₂), **caractérisé en ce qu'**un dispositif anti-rotation (5) est prévu sur le corps d'anneau de friction (3), qui, par rapport à la surface de friction (301) se rétrécissant de manière conique, est disposé sur le côté ayant le plus petit diamètre et/ou s'étend dans la direction de l'axe d'anneau de friction sur la surface d'installation extérieure (302) sensiblement perpendiculaire à l'axe d'anneau de friction.

2. Un anneau de friction selon la revendication 1, dans lequel l'angle d'installation (α₂) est plus grand que l'angle de friction (α₁).

3. Un anneau de friction selon l'une des revendications 1 ou 2, dans lequel le corps d'anneau de friction (3) est un corps d'anneau de friction segmenté (3) comprenant une pluralité de segments d'anneau de friction séparés (31, 32, 33, 34) qui, dans une disposition annulaire, forment le corps d'anneau de friction (3) de telle sorte que le corps d'anneau de friction (3), à l'état installé, présente un premier rayon (R₁) dans une première configuration étendue et un deuxième rayon (R₂) dans une deuxième configuration contractée.

4. Un anneau de friction selon l'une des revendications précédentes, dans lequel la surface d'installation extérieure (302) est formée comme une autre surface de friction.

5. Un anneau de friction selon l'une des revendications précédentes, dans lequel un revêtement de friction, en particulier un revêtement de friction sous la forme d'une garniture de friction en carbone, est prévu sur la surface de friction (301) et/ou sur la surface d'installation (302).

6. Un anneau de friction selon l'une des revendications précédentes, dans lequel l'anneau de friction est une pièce emboutie en acier ou une pièce formée en tôle.

7. Une unité de synchronisation avec un anneau de friction (1) selon l'une des revendications précédentes.

8. Une unité de synchronisation selon la revendication 7, dans lequel l'unité de synchronisation comprend en outre un manchon coulissant (6), un anneau de synchronisation (7) et une roue dentée (8), qui sont disposés coaxialement à l'axe d'anneau de friction (4) de telle sorte que, dans l'état de fonctionnement, l'anneau de synchronisation (7) peut être déplacée par le manchon coulissant (6) avec l'anneau de friction (1) le long de l'axe d'anneau de friction (4) en direction de la roue dentée (8), de sorte que la surface de friction intérieure (301) du corps d'anneau de friction (3) soit engagée avec la roue dentée (8).

9. Une boîte de vitesses à roues dentées pour un véhicule, en particulier pour une voiture particulière, un véhicule de transport ou un camion, avec un anneau de friction (1) ou une unité de synchronisation (2) selon l'une des revendications précédentes.
